# EUROPÄISCHE PATENTSCHRIFT

(11) **EP 1 863 662 B1**
(45) Veröffentlichungstag und Bekanntmachung des Hinweises auf die Patenterteilung: **29.04.2009**
(21) Anmeldenummer: 06722732.2
(22) Anmeldetag: 31.03.2006
(51) Int. Cl.: B60H 1/22, F23D 11/44, F16K 31/06

(54) **KRAFTFAHRZEUGHEIZUNG UND VERFAHREN ZUM VORWÄRMEN VON FLÜSSIGEM BRENNSTOFF**
MOTOR VEHICLE HEATING SYSTEM AND METHOD FOR PRE-HEATING LIQUID FUEL
CHAUFFAGE DE VEHICULE ET PROCEDE DE PRECHAUFFAGE DE CARBURANT LIQUIDE

(30) Priorität: 01.04.2005 DE 102005015118; 07.11.2005 DE 102005052985
(43) Veröffentlichungstag der Anmeldung: 12.12.2007
(73) Patentinhaber: Webasto AG, 82131 Stockdorf (DE)
(72) Erfinder: SCHMIDT, Vitali, 81375 München (DE); BÖHME, Burghard, 17036 Neubrandenburg (DE); MIETHE, Harald, 17036 Neubrandenburg (DE)
(86) Internationale Anmeldenummer: PCT/DE2006/000581
(87) Internationale Veröffentlichungsnummer: WO 2006/102886

(56) Entgegenhaltungen:
- DE-A1- 3 025 283
- DE-A1- 4 431 189
- DE-A1- 10 100 375
- DE-A1- 10 136 049
- DE-A1- 10 327 681

## Beschreibung

Die Erfindung betrifft eine Kraftfahrzeugheizung, die dazu ausgelegt ist, mit flüssigem Brennstoff betrieben zu werden, und die eine Brennstoffpumpe sowie ein dieser nachgeschaltetes elektromagnetisch betätigtes Brennstoffventil aufweist.

Es ist bekannt, in die Brennstoffzufuhr von Kraftfahrzeugheizungen eine elektrische Heizpatrone zu integrieren, die zur Brennstofferwärmung dient. Weiterhin ist es bekannt, zwischen der Brennstoffpumpe und der Brenner-/Wärmetauschereinheit ein elektromagnetisch betätigtes Brennstoffventil vorzusehen, insbesondere ein Abschalt- beziehungsweise Absperrventil.

Da die beim Stand der Technik zur Brennstofferwärmung verwendeten Heizpatronen eine hohe Leistungsaufnahme von beispielsweise 40 Watt aufweisen, erfolgt die Brennstofferwärmung bisher nicht während des gesamten Brennbetriebs der Kraftfahrzeugheizung, sondern nur in der Startphase. Eine Brennstofferwärmung bewirkt jedoch in für die Verbrennung vorteilhafter Weise eine Erhöhung der Enthalpie des Brennstoffs und eine Herabsetzung der Viskosität.

Aus der DE 30 25 283 A1 ist eine Kraftfahrzeug heirung bekannt, bei der die Magnetspule eines Brennstoff ventils zur Brennstoff vorwärmung verwendet wird.

Es ist daher die Aufgabe der vorliegenden Erfindung, die gattungsgemäßen Kraftfahrzeugheizungen und die gattungsgemäßen Verfahren derart weiterzubilden, dass eine Brennstofferwärmung während des gesamten Brennbetriebes der Kraftfahrzeugheizung möglich wird.

Diese Aufgabe wird durch die Merkmale des unabhängigen Anspruchs 1 gelöst.

Vorteilhafte Ausgestaltungen und Weiterbildungen der Erfindung ergeben sich aus den abhängigen Ansprüchen.

Die erfindungsgemäße Kraftfahrzeugheizung baut auf dem gattungsgemäßen Stand der Technik dadurch auf, dass das elektromagnetisch betätigte Brennstoffventil dazu ausgelegt ist, Brennstoff vorzuwärmen. Dies gelingt, indem das Brennstoffventil konstruktiv so ausgebildet wird, dass die durch die Eigenerwärmung in der Wicklung des elektromagnetisch betätigten Brennstoffventils entstehende Wärme zur Brennstoffvorwärmung genutzt wird.

Erfindungsgemäß weist das elektromagnetisch betätigte Brennstoffventil zumindest ein Wicklungspaket auf, wobei zwischen dem Wicklungspaket und einem Bereich, in den Brennstoff gelangt, ein Material mit einer hohen Wärmeleitfähigkeit vorgesehen ist. Bei dem Material mit hoher Wärmeleitfähigkeit kann es sich insbesondere um ein Metall handeln, beispielsweise um Aluminium. Das Material mit hoher Wärmeleitfähigkeit kann gegebenenfalls in anderes Material eingebettet sein, beispielsweise in ein Kunststoffgehäuse. Wesentlich ist jedoch, dass das Material mit der hohen Wärmeleitfähigkeit eine Wärmebrücke von der Wicklung zu zumindest einem Bereich erzeugt, der mit dem Brennstoff in Kontakt gelangt.

Bei der erfindungsgemäßen Kraftfahrzeugheizung ist weiterhin vorgesehen, dass zwischen dem Wicklungspaket und der Umgebung des elektromagnetisch betätigten Brennstoffventils ein Material mit einer niedrigen Wärmeleitfähigkeit vorgesehen ist. Bei dem Material mit niedriger Wärmeleitfähigkeit kann es sich prinzipiell um jedes zur Wärmeisolation geeignete Material handeln, beispielsweise um geschäumte Kunststoffe und/oder Metalle. Auch ein schichtartiger Aufbau des zur Wärmeisolation verwendeten Materials mit niedriger Wärmeleitfähigkeit ist möglich.

In diesem Zusammenhang wird es als besonders vorteilhaft erachtet, wenn vorgesehen ist, dass das elektromagnetisch betätigte Brennstoffventil ein Koaxialventil ist. Bei einem derartigen Koaxial- beziehungsweise Inlineventil gelangt der durch das Brennstoffventil strömende Brennstoff besonders nahe in den Bereich der Wicklung, so dass eine besonders effiziente Wärmeübertragung möglich wird.

Weiterhin wird für die erfindungsgemäße Kraftfahrzeugheizung bevorzugt, dass sie einen ersten Betriebszustand, in dem das elektromagnetisch betätigte Brennstoffventil so angesteuert wird, dass es Brennstoff im geöffneten Zustand vorwärmt, und einen zweiten Betriebszustand aufweist, in dem das elektromagnetisch betätigte Brennstoffventil so angesteuert wird, dass es Brennstoff im geschlossenen Zustand vorwärmt. Die Ansteuerung in dem zweiten Betriebszustand kann dabei durch eine Spannung erfolgen, die unterhalb der Anzugsspannung des elektromagnetisch betätigten Brennstoffventils liegt. Das Vorsehen der beiden genannten Betriebszustände ist besonders vorteilhaft, weil es dadurch beispielsweise möglich wird, während Phasen, in denen die Brennkammer mit Luft gespült oder in denen vorgeglüht wird und das Brennstoffventil geschlossen ist, den demnächst zur Verbrennung vorgesehen Brennstoff vorzuwärmen.

Darüber hinaus kann die Kraftfahrzeugheizung derart weitergebildet sein, dass im zweiten Betriebszustand eine getaktete Spannung an dem Brennstoffventil anliegt. Durch den somit erzeugten Auf- und Abbau eines Magnetfeldes, kann eine erhöhte Wärmeenergie erzeugt werden.

Außerdem kann die Kraftfahrzeugheizung so weitergebildet sein, dass das elektromagnetisch betätigte Brennstoffventil einen magnetischen Ventilkolben aufweist. Dieser magnetische Ventilkolben kann beispielsweise erreicht werden, indem der Ventilkolben als Dauermagnet ausgebildet wird. Wenn in einem derartigen Brennstoffventil ein Magnetfeld ausbildet wird, dessen Magnetpole entgegengesetzt zu im ersten Betriebszustand ausgebildeten Magnetpolen sind, kann dadurch sicher vermieden werden, dass das Brennstoffventil unbeabsichtigt öffnet und darüber hinaus wird das Magnetfeld zusätzlich zum Vorwärmen auch noch dazu genutzt, die Dichtkraft zu erhöhen, mit der das Brennstoffventil geschlossen wird.

Bevorzugte Ausführungsformen der Erfindung werden nachfolgend anhand der Zeichnungen beispielhaft erläutert.

Es zeigen:
- Figur 1: ein schematisches Blockschaltbild der erfindungs- gemäßen Kraftfahrzeugheizung;
- Figur 2: eine schematische Ansicht einer ersten Ausfüh- rungsform eines Brennstoffventils, das mit der erfindungsgemäßen Kraftfahrzeugheizung verwendet werden kann; und
- Figur 3: eine schematische Ansicht einer zweiten Ausfüh- rungsform eines Brennstoffventils, das mit der erfindungsgemäßen Kraftfahrzeugheizung verwendet werden kann.

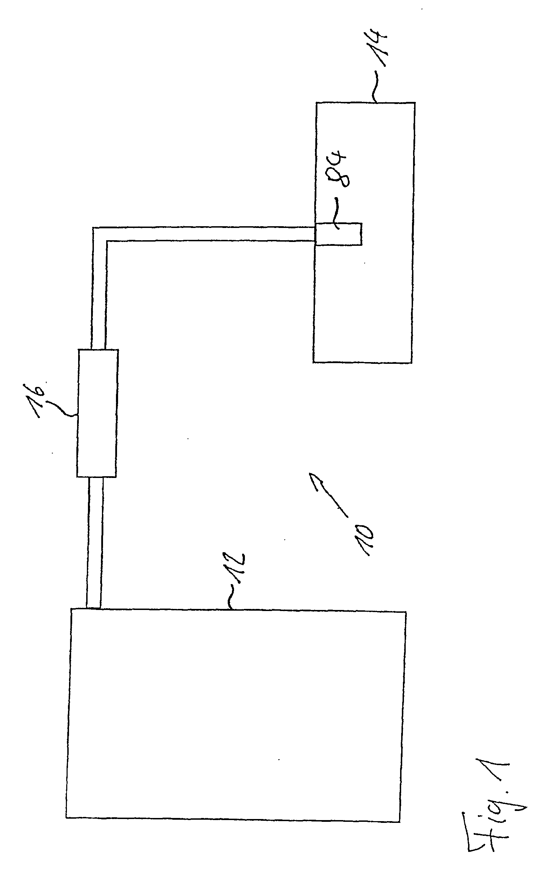

Figur 1 zeigt ein schematisches Blockschaltbild, das eine Ausführungsform der erfindungsgemäßen Kraftfahrzeugheizung veranschaulicht. Bei der dargestellten Kraftfahrzeugheizung 10 kann es sich beispielsweise um eine Zusatz- oder Standheizung handeln. Die dargestellte Kraftfahrzeugheizung 10 umfasst eine Hubkolbenbrennstoffpumpe 16, mit deren Hilfe flüssiger Brennstoff von einem Brennstofftank 12 zu einer Brenner-/Wärmetauschereinheit 14 geführt werden kann. Je nachdem, ob es sich um eine Luft- oder Wasserheizung handelt, steht die Brenner-/Wärmetauschereinheit 14 mit weiteren nicht dargestellten Luft- und/oder Wasserleitungen in Verbindung, wie dies dem Fachmann gut bekannt ist. Die Brenner-/Wärmetauschereinheit 14 umfasst weiterhin ein Brennstoffventil 84, mit dem die Brennstoffzufuhr ganz oder teilweise abgeschaltet werden kann. Dieses Brennstoffventil 84 muss nicht zwingend in die Brenner-/Wärmetauschereinheit 14 integriert sein, sondern es kann auch zwischen der Hubkolbenbrennstoffpumpe 16 und der Brenner-/Wärmetauschereinheit 14 angeordnet sein. Die in Figur 1 dargestellte Kraftfahrzeugheizung weist keine separate Heizpatrone zum Vorwärmen von Brennstoff auf, sondern der Brennstoff wird erfindungsgemäß durch die Abwärme des Brennstoffventils 84 vorgewärmt. Alternativ kann jedoch zusätzlich eine Heizpatrone vorgesehen sein, insbesondere eine Heizpatrone mit geringerer Leistung (beispielsweise 20 Watt) als beim Stand der Technik.

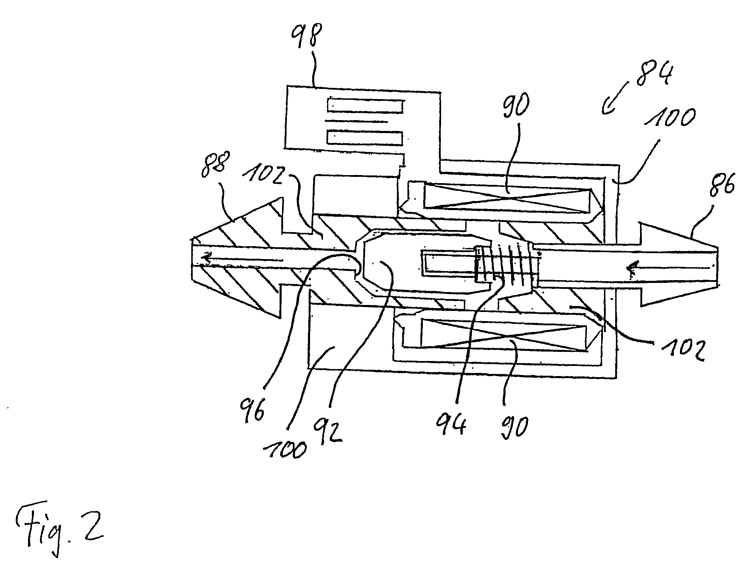

Figur 2 zeigt eine schematische Schnittansicht einer Ausführungsform eines Brennstoffventils 84, das Bestandteil der Kraftfahrzeugheizung 10 von Figur 1 sein kann. Bei dem Brennstoffventil 84 handelt es sich um ein elektromagnetisch betätigtes Koaxialventil, das einen Brennstoffeinlass 86 und einen Brennstoffauslass 88 aufweist. Sobald an einen elektrischen Anschluss 98 eine geeignete Spannung (Gleichspannung, Wechselspannung oder pulsweitenmodulierte Spannung) angelegt wird, wird eine Wicklung 90 bestromt, wodurch ein Ventilkolben 92 bezogen auf die Darstellung von Figur 2 nach rechts in Bewegung versetzt wird, so dass das Brennstoffventil 84 öffnet und Brennstoff vom Brennstoffeinlass 86 zum Brennstoffauslass 88 strömen kann. Im stromlosen Zustand der Wicklung 90 drückt eine Rückstellfeder 94 den Ventilkolben 92 bezogen auf die Darstellung von Figur 2 derart nach links, dass der Ventilkolben 92 mit einem Ventilsitz 96 zusammenwirkt, um das Brennstoffventil 84 zu schließen.

Das in Figur 2 dargestellte Brennstoffventil 84 ist dazu ausgelegt, Brennstoff vorzuwärmen. Zur Erwärmung des Brennstoffs wird über die Wicklung 90 erzeugte Wärme genutzt, wobei zwischen der Wicklung 90 und den Bereichen, mit denen der Brennstoff in Kontakt gelangt, ein Material 102 mit hoher Wärmeleitfähigkeit vorgesehen ist. Bei dem Material 102 mit hoher Wärmeleitfähigkeit kann es sich insbesondere um ein Metall wie Aluminium handeln. Die Erwärmung des Brennstoffs wird dadurch optimiert, dass im Außenbereich des Brennstoffventils 84 ein Material 100 mit niedriger Wärmeleitfähigkeit vorgesehen ist, das heißt ein Wärmeisolator. Das Material 100 mit niedriger Wärmeleitfähigkeit kann prinzipiell durch jedes dem Fachmann bekannte Isolationsmaterial gebildet sein, beispielsweise durch Metall- und/oder Kunststoffschäume. Obwohl dies nicht dargestellt ist, kann das Material 100 mit niedriger Wärmeleitfähigkeit weiterhin einen schichtartigen Aufbau aufweisen. Es ist klar, dass im geöffnetem Zustand des Brennstoffventils 84 aufgrund der entsprechenden Bestromung der Wicklung 90 ausreichend Abwärme erzeugt wird, um den Brennstoff vorzuwärmen. Das Brennstoffventil 84 kann jedoch auch so ausgelegt sein, dass eine niedrigere Bestromung der Wicklung 90, die noch nicht zum Öffnen des Brennstoffventils 84 führt, zur Vorwärmung des Brennstoffs ausreicht.

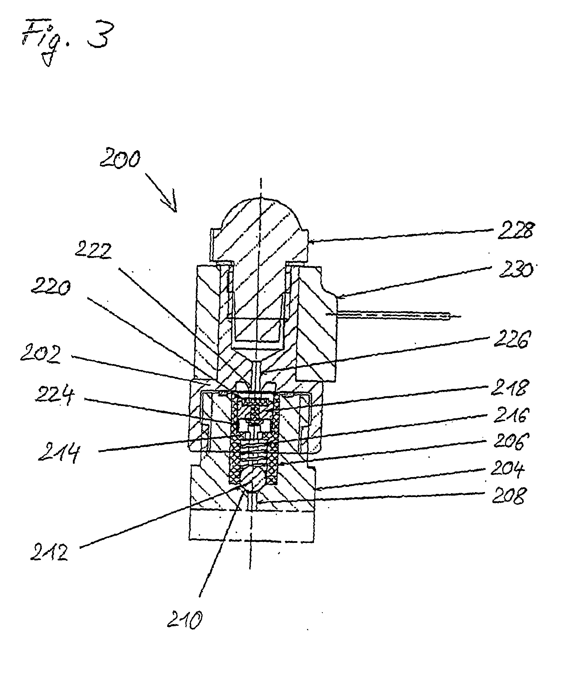

Figur 3 zeigt eine schematische Ansicht einer zweiten Ausführungsform eines Brennstoffventils, das mit der erfindungsgemäßen Kraftfahrzeugheizung verwendet werden kann. Das Brennstoffventil 200 ist in Abwandlung gegenüber Figur 1 nicht wie das Brennstoffventil 84 in die Brenner-/Wärmetauschereinheit integriert, sondern am Ausgang der Brennstoffpumpe montiert. Das Brennstoffventil 200 hat einen im Wesentlichen zylinderförmigen Ventilkern 202. Dieser Ventilkern 202 ist an einem Ende becherförmig ausgebildet, wobei sich die Wände der Becherform koaxial zur Mittelachse des Brennstoffventils 200 erstrecken und abschnittsweise mit einem Innengewinde versehen sind. Darüber hinaus kann der Ventilkern 202 aus einem Material mit hoher Wärmeleitfähigkeit ausgebildet sein. Von einem Pumpengehäuse der Brennstoffpumpe steht ein im Wesentlichen zylinderförmiger Anschlussstutzen 204 hervor, der abschnittsweise mit einem Außengewinde versehen ist. Das Brennstoffventil 200 ist an den Anschlussstutzen 204 montiert, indem das Innengewinde des Ventilkerns 202 koaxial mit dem Außengewinde des Anschlussstutzens 204 verschraubt wird. Der Anschlussstutzen 204 ist in seinem Innenbereich koaxial mit einer im Wesentlichen hohlzylinderförmigen Führungsbuchse 206 versehen, die bündig mit dem brennstoffventilseitigen Ende des Anschlussstutzens 204 abschließt. Vom Innenraum der Führungsbuchse 206 erstreckt sich ein Brennstoffkanal 208 in die Brennstoffpumpe. Dabei verjüngt sich der Brennstoffkanal 208 zunächst am pumpenseitigen Ende der Führungsbuchse 206 vom Innendurchmesser der Führungsbuchse 208 auf einen kleineren Innendurchmesser, mit dem der Brennstoffkanal in die Brennstoffpumpe geführt wird. Der sich verjüngende Abschnitt bildet dabei einen Ventilsitz 210, auf dem eine Ventilkugel 212 aufsetzbar ist. Die Ventilkugel 212 ist in der Führungsbuchse 206 zwischen dem Ventilsitz 210 und einem Innensteg 214 der Führungsbuchse 206 bewegbar geführt. Der Innensteg 214 der Führungsbuchse 206 wird durch eine abschnittsweise Verringerung des Innendurchmessers der Führungsbuchse 206 gebildet. Zwischen dem Innensteg 214 und der Ventilkugel 212 ist koaxial eine Druckfeder 216 eingefügt, welche die Ventilkugel 212 in Richtung des Ventilsitzes 210 vorspannt. Auf der zur Ventilkugel 212 gegenüberliegenden Seite der Führungsbuchse 206 ist ein Ventilteller bzw. ein Ventilkörper 218 eingefügt, der als Dauermagnet ausgeführt und zwischen dem Steg 214 und dem Boden der vorstehend erwähnten Becherform des Ventilkerns 202 bewegbar von der Führungsbuchse 206 geführt wird. In den Ventilteller 218 ist koaxial ein Dichtelement 220 integriert, welches jeweils einen Mittelbereich der pumpenseitigen und der brennstoffventilseitigen Fläche des Ventiltellers 218 bedeckt. Am Boden der Becherform des Ventilkerns 202 ist ein stutzenartiger Ventilsitz 222 ausgebildet, der bündig zum Boden der Becherform abschließt. Durch das Dichtelement 220 ist eine sichere Abdichtung gewährleistet, wenn der Ventilteller 218, wie später erläutert, hin zum Ventilsitz 222 gedrückt wird. Zwischen dem Ventilteller 218 und dem Innensteg 214 ist eine Druckfeder 224 eingefügt, die den Ventilteller 218 in Richtung des Ventilsitzes 222 vorspannt. Auf der Innenseite der Führungsbuchse 206 sind in Längsrichtung verlaufende Überströmkanäle (nicht dargestellt) ausgebildet, die dem Brennstoff ermöglichen, an der Ventilkugel 212 und dem Ventilteller 218 vorbeizuströmen. Vom Ventilsitz 222 erstreckt sich entlang seiner Mittelachse ein Zulaufkanal 226 zu einer Düse 228. Diese Düse 228 ist in das der Becherform gegenüberliegende Ende des Ventilkerns 202 eingefügt. Insbesondere ist an dieser Stelle ein im Wesentlichen zylinderförmiges, koaxiales Sackloch eingebracht, welches mit einem Innengewinde versehen ist. Mittels eines an der Düse 228 vorgesehenen Außengewindes wird die Düse 228 in das Innengewinde des Sacklochs geschraubt. Des Weiteren kann diese Düse aus einem Material mit hoher Wärmeleitfähigkeit hergestellt sein. Zwischen der Düse 228 und der Führungsbuchse 206 ist der Ventilkern 202 an seinem Außendurchmesser koaxial zur Mittelachse des Brennstoffventils 200 mit einer Magnetspule 230 versehen.

Zu Beginn des Betriebs wird der Brennstoff durch den Brennstoffkanal 208 des Anschlussstutzens 204 gefördert und hebt dabei die mittels Druckfeder 216 vorgespannte Ventilkugel 212 vom Ventilsitz 210 ab. Dadurch werden die Überströmkanäle in der Führungsbuchse 206 freigegeben. In einem nicht bestromten Zustand der Magnetspule 230 wird der Ventilteller 218 durch die Vorspannung der Druckfeder 224 hin zum Ventilsitz 222 gedrückt und das Dichtelement 220 verhindert ein Weiterströmen des Brennstoffs zur Düse 228, d.h. das Brennstoffventil 200 befindet sich in einem geschlossenen Zustand.

Soll bei geschlossenem Brennstoffventil 200 der im Brennstoffventil 200 befindliche Brennstoff vorgewärmt werden, so wird an die Magnetspule 230 eine vorzugsweise getaktete Spannung angelegt. Durch den Auf- und Abbau des Magnetfeldes entsteht eine Wärmeenergie, die den Kanalbereich des Zulaufkanals 226 stromaufwärts der Düse 228 sowie die Düse 228 selbst erwärmt. Die Magnetspule 230 wird dabei so angesteuert, dass sich das Magnetfeld nur in eine Richtung aufbauen kann, dabei wird in der vorliegenden Ausführungsform der Nordpol an der Düse 228 gebildet. Das Magnetfeld des Ventiltellers 218, der ein Dauermagnet ist, ist dem von der Magnetspule 230 erzeugten Magnetfeld entgegengesetzt. Dadurch übt das Magnetfeld der Magnetspule 230 eine anziehende Kraft auf den Ventilteller 218 aus, die den Ventilteller 218 zusätzlich zur Federkraft der Druckfeder 224 hin zum Ventilsitz 222 drückt. Durch diesen Effekt wird die Dichtung zwischen dem Dichtelement 220 und dem Ventilsitz 222 erhöht.

Um das Brennstoffventil zu öffnen, wird die Polarität der Magnetspule 230 umgekehrt (d.h. umgekehrt zum geschlossenen Zustand des Brennstoffventils mit Vorwärmung) und beispielsweise dauerbestromt. Durch die Umkehr der Polarität baut die Magnetspule 230 ein Magnetfeld auf, dessen Magnetpole ebenfalls umgekehrt sind (d.h. umgekehrt zum geschlossenen Zustand des Brennstoffventils mit Vorwärmung). In der vorliegenden Ausführungsform entsteht der Südpol somit an der Düse 228. Dadurch wird der Ventilteller 218 vom Magnetfeld der Magnetspule 230 abgestoßen und hebt sich vom Ventilsitz 222 ab. Somit wird der Zulaufkanal 226 freigegeben. Der inzwischen vorgewärmte Brennstoff strömt durch die Düse 228 ein, wird entzündet und setzt ein Heizgerät bzw. eine Brenner-/Wärmetauschereinheit in Betrieb. Ebenso wird neu nachströmender Brennstoff durch die Wärmeenergie erwärmt, welche im geöffneten Zustand mittels der Magnetspule 230 erzeugt wird.

Durch die Verwendung des in Figur 2 dargestellten Brennstoffventils 84 oder des in Figur 3 dargestellten Brennstoffventils 200 kann gegebenenfalls auf eine üblicherweise verwendete Heizpatrone verzichtet werden. Derartige Heizpatronen weisen häufig eine hohe Leistungsaufnahme von beispielsweise 40 Watt auf und werden daher nicht während des gesamten Brennbetriebs der Kraftfahrzeugheizung bestromt, sondern nur in der Startphase. Im Gegensatz hierzu kann mit dem Brennstoffventil 84; 200 während des gesamten Brennerbetriebs eine Vorwärmung des Brennstoffs erfolgen, wobei das Brennstoffventil 84; 200 gegebenenfalls eine erhöhte elektrische Leistung aufweisen kann. Durch die Brennstofferwärmung erfolgen eine Erhöhung der Enthalpie des Brennstoffs und eine Herabsetzung der Viskosität, was sich positiv auf den Brennbetrieb auswirkt. Durch diese multifunktionelle Nutzung des Brennstoffventils ergeben sich darüber hinaus die Vorteile, dass eine kostengünstigere und kompaktere Bauweise der Fahrzeugheizung erreicht wird, die mit verringerter Fertigungszeit hergestellt werden kann. Durch die multifunktionelle Nutzung muss zumindest in einigen Fällen kein extra Heizelement einschließlich dessen Anbringung, Befestigung, Verkabelung und Ansteuerung vorgesehen werden. Darüber hinaus können die Kanalführungsbohrungen für die Durchleitung des Brennstoffs verkürzt werden, wodurch diese optimierte Kanalführung wiederum eine Reduzierung des Brennstoff-Totvolumens ermöglicht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugzeichenliste:

- 10: Kraftfahrzeugheizung
- 12: Brennstofftank
- 14: Brenner-/Wärmetauschereinheit
- 16: Hubkolbenbrennstoffpumpe
- 84: Brennstoffventil
- 86: Brennstoffeinlass
- 88: Brennstoffauslass
- 90: Wicklung
- 92: Ventilkolben
- 94: Rückstellfeder
- 96: Ventilsitz
- 98: Elektrischer Anschluss
- 100: Material mit niedriger Wärmeleitfähigkeit
- 102: Material mit hoher Wärmeleitfähigkeit
- 200: Brennstoffventil
- 202: Ventilkern
- 204: Anschlussstutzen
- 206: Führungsbuchse
- 208: Brennstoffkanal
- 210: Ventilsitz
- 212: Ventilkugel
- 214: Innensteg
- 216: Druckfeder
- 218: Ventilteller
- 220: Dichtelement
- 222: Ventilsitz
- 224: Druckfeder
- 226: Zulaufkanal
- 228: Düse
- 230: Magnetspule

## Patentansprüche

1. Kraftfahrzeugheizung (10), die dazu ausgelegt ist, mit flüssigem Brennstoff betrieben zu werden, und die eine Brennstoffpumpe (16) sowie ein dieser nachgeschaltetes elektromagnetisch betätigtes Brennstoffventil (84; 200) aufweist, wobei das elektromagnetisch betätigte Brennstoffventil (84; 200) mindestens ein Wicklungspaket (90,230) aufweist, das dazu ausgelegt ist, Brennstoff vorzuwärmen,
**dadurch gekennzeichnet, dass** zwischen dem Wicklungspaket (90; 230) des Brennstoffventils (84; 200) und einem Bereich des Brennstoffventils (84;200), in den Brennstoff gelangt, ein Material (102; 202) mit einer hohen Wärmeleitfähigkeit vorgesehen ist, und dass zwischen dem Wicklungspaket (90) und der Umgebung des elektromagnetisch betätigten Brennstoffventils (84) ein Material (100) mit einer niedrigen Wärmeleitfähigkeit vorgesehen ist.

2. Kraftfahrzeugheizung (10) nach Anspruch 1, **dadurch gekennzeichnet, dass** das elektromagnetisch betätigte Brennstoffventil (84; 200) ein Koaxialventil ist.

3. Kraftfahrzeugheizung nach Anspruch 1 oder 2, die derart ausgebildet ist, dass sie einen ersten Betriebszustand, in dem das elektromagnetisch betätigte Brennstoffventil (84;200) so angesteuert wird, dass es Brennstoff im geöffneten Zustand vorwärmt, und einen zweiten Betriebszustand aufweist, in dem das elektromagnetisch betätigte Brennstoffventil (84; 200) so angesteuert wird, dass es Brennstoff im geschlossenen Zustand vorwärmt.

4. Kraftfahrzeugheizung (10) nach Anspruch 3, **dadurch gekennzeichnet, dass** im zweiten Betriebszustand eine getaktete Spannung an dem Brennstoffventil (84; 200) anliegt.

5. Kraftfahrzeugheizung (10) nach einem der vorhergehenden Ansprüche, **dadurch gekennzeichnet, dass** das elektromagnetisch betätigte Brennstoffventil (84; 200) einen magnetischen Ventilkolben (92; 218) aufweist.

6. Kraftfahrzeugheizung nach Anspruch 1, **dadurch gekennzeichnet, dass** das Brennstoffventil (84; 200) im geschlossenen Zustand so bestromt wird, dass es ein Magnetfeld ausbildet, dessen Magnetpole entgegengesetzt zu im geöffneten Zustand ausgebildeten Magnetpolen sind.

## Claims

1. Motor vehicle heating system (10) which is designed to be operated with liquid fuel which has a fuel pump (16) and an electromagnetically actuated fuel valve (84; 200) following the latter, the electromagnetically actuated fuel valve (84; 200) having at least one winding package (90, 230) which is designed for preheating the fuel, **characterized in that** a material (102; 202) having high thermal conductivity is provided between the winding package (90; 230) of the fuel valve (84; 200) and a region of the fuel valve (84; 200) into which fuel passes, and **in that** a material (100) having low thermal conductivity is provided between the winding package (90) and the surroundings of the electromagnetically actuated fuel valve (84).

2. Motor vehicle heating system (10) according to Claim 1, **characterized in that** the electromagnetically actuated fuel valve (84; 200) is a coaxial valve.

3. Motor vehicle heating system according to Claim 1 or 2, which is designed in such a way that it has a first operating state, in which the electromagnetically actuated fuel valve (84; 200) is activated such that it preheats fuel in the open state, and a second operating state, in which the electromagnetically actuated fuel valve (84; 200) is activated such that it preheats fuel in the closed state.

4. Motor vehicle heating system (10) according to Claim 3, **characterized in that,** in the second operating state, a clocked voltage is applied to the fuel valve (84; 200).

5. Motor vehicle heating system (10) according to one of the preceding claims, **characterized in that** the electromagnetically actuated fuel valve (84; 200) has a magnetic valve piston (92; 218).

6. Motor vehicle heating system according to Claim 1, **characterized in that,** in the closed state, current is applied to the fuel valve (84; 200) such that the latter generates a magnetic field, the magnetic poles of which are opposite to the magnetic poles formed in the open state.

## Revendications

1. Chauffage de véhicule automobile (10), conçu pour fonctionner avec du carburant liquide, et qui présente une pompe de carburant (16) ainsi qu'une soupape de carburant (84 ; 200) électromagnétique montée en aval de celle-ci, la soupape de carburant (84 ; 200) électromagnétique présentant au moins un paquet d'enroulements (90, 230), qui est conçu pour préchauffer du carburant,
**caractérisé en ce qu'**entre le paquet d'enroulements (90 ; 230) de la soupape de carburant (84 ; 200) et une région de la soupape de carburant (84 ; 200), dans laquelle parvient du carburant, est prévu un matériau (102 ; 202) de grande conductibilité thermique, et **en ce qu'**entre le paquet d'enroulements (90) et l'environnement de la soupape de carburant (84) électromagnétique, est prévu un matériau (100) de faible conductibilité thermique.

2. Chauffage de véhicule automobile (10) selon la revendication 1, **caractérisé en ce que** la soupape de carburant (84 ; 200) électromagnétique est une soupape coaxiale.

3. Chauffage de véhicule automobile selon la revendication 1 ou 2, réalisé de telle sorte qu'il présente un premier état de fonctionnement, dans lequel la soupape de carburant (84 ; 200) électromagnétique est commandée de telle sorte qu'elle préchauffe le carburant dans l'état ouvert, et un deuxième état de fonctionnement, dans lequel la soupape de carburant (84 ; 200) électromagnétique est commandée de telle sorte qu'elle préchauffe le carburant dans l'état fermé.

4. Chauffage de véhicule automobile (10) selon la revendication 3, **caractérisé en ce que** dans le deuxième état de fonctionnement, une tension cadencée s'applique à la soupape de carburant (84 ; 200).

5. Chauffage de véhicule automobile (10) selon l'une quelconque des revendications précédentes, **caractérisé en ce que** la soupape de carburant (84 ; 200) électromagnétique présente un piston de soupape magnétique (92 ; 218).

6. Chauffage de véhicule automobile selon la revendication 1, **caractérisé en ce que** la soupape de carburant (84 ; 200) dans l'état fermé est parcourue par un courant de telle sorte qu'elle produise un champ magnétique dont les pôles magnétiques sont opposés à des pôles magnétiques réalisés dans l'état ouvert.
